(19) **Europäisches Patentamt**
**European Patent Office**
**Office européen des brevets**

(11) **EP 1 868 063 B1**

(12) **EUROPEAN PATENT SPECIFICATION**

(45) Date of publication and mention
of the grant of the patent:
**22.09.2010 Bulletin 2010/38**

(51) Int Cl.:
***G06F 3/01*** *(2006.01)*

(21) Application number: **07110393.1**

(22) Date of filing: **15.06.2007**

(54) **Tactile - feedback device**

Tastfeedbackvorrichtung

Dispositif de réponse tactile

(84) Designated Contracting States:
**DE FR GB IT NL**

(30) Priority: **15.06.2006 JP 2006166205**

(43) Date of publication of application:
**19.12.2007 Bulletin 2007/51**

(73) Proprietor: **Canon Kabushiki Kaisha**
**Ohta-Ku,**
**Tokyo 146-8501 (JP)**

(72) Inventors:
• **Nogami, Atsushi**
**Ohta-ku Tokyo (JP)**
• **Nishimura, Naoki**
**Ohta-ku Tokyo (JP)**

• **Tokita, Toshinobu**
**Ohta-ku Tokyo (JP)**
• **Iwase, Yoshihiko**
**Ohta-ku Tokyo (JP)**

(74) Representative: **Garner, Jonathan Charles**
**Stapleton**
**Canon Europe Ltd**
**3 The Square**
**Stockley Park**
**Uxbridge**
**Middlesex**
**UB11 1ET (GB)**

(56) References cited:
**WO-A-02/27705      WO-A-97/20305**
**US-A- 6 087 942      US-A1- 2003 011 252**

**Description**

BACKGROUND OF THE INVENTION AND METHOD

Field of the Invention

The present invention relates to a tactile-feedback device and method, and particularly relates to a tactile-feedback device and method configured to allow a user to perceive contact with a virtual object in the field of virtual reality.

Description of the Related Art

Within the technology field of presenting virtual reality to a user, the study of a tactile display configured to allow a user to touch a virtual object, or to operate a virtual object has been performed.

What is generally referred to as "tactile displays" in the broad sense are classified into "haptic displays" (force feedback displays) configured to present reaction force from an object to a human body, and "tactile displays" in the narrower sense configured to present the feel of an object. However, most of the existing haptic displays are poor in portability, and also have a complex configuration, and tend to be expensive. Also, tactile displays tend to be complex in configuration, and also with the current technology, it is difficult to present the feel of an object to a user sufficiently.

Accordingly, while it is difficult to present the sufficient reaction force and accurate feel of a virtual object to a user, a tactile-feedback device configured to present whether the virtual object has been touched, has been studied. With this device, vibration motors are put on a human body, and when touching a virtual object, the vibration motor at an appropriate position is vibrated, thereby allowing a user to perceive contact with the object. According to this tactile-feedback device, the user can perceive which part of his/her body touches the object. Also, vibration motors are small, cheap, and light-weight, which can be readily put on all over a human body, and accordingly, with a virtual reality system having high flexibility in movement, this device is particularly effective.

Examples of an existing tactile-feedback device employing vibration motors include the following.

With PCT Japanese Translation Patent Publication No. 2000-501033 (corresponding to USP No. 6,088,017, and hereafter, referred to as Patent Document 1), a technique has been disclosed wherein a data glove configured to obtain the position of a fingertip is installed with vibration motors, and vibration is provided to the fingertip, thereby allowing a user to perceive the contact between the fingertip and a virtual object.

Also, with Yano et al.: " Development of Haptic Suit for whole human body using vibrators", Virtual Reality Society of Japan paper magazine, Vol. 3, No. 3, 1998 (hereafter, referred to as Non-Patent Document 1), a device has been disclosed wherein a total of 12 vibration motors are put on the whole body, and the vibration motors are vibrated at the time of contacting with a virtual wall, thereby allowing a user to perceive the wall. With this Non-Patent Document 1, the positions where vibration motors are put on are the head, the back of a hand, an elbow, the waistline (three pieces), a knee, and an ankle, from the perspective of a human body sensory diagram.

Also, with Jonghyun Ryu et al.: "Using a Vibrotactile Display for Enhanced Collision Perception and Presence", VRST'04, November 10-12, 2004, Hong Kong (hereafter, referred to as Non-Patent Document 2), a technique has been disclosed wherein vibration motors are put on four places on an arm, and four places on a foot, the vibration of vibration motors are changed, thereby presenting the contact to an object of different texture.

Also, with R. W. Lindeman et al.: "Towards Full-Body Haptic Feedback: The Design and Deployment of a Spatialized Vibrotactile Feedback System", VRST'04, November 10-12, 2004, Hong Kong (hereafter, referred to as Non-Patent Document 3), a device, which has been developed for battlefield simulations, has been disclosed wherein vibration motors are put on a human body. The features of this Non-Patent Document 3 are to perform control of vibration motors wirelessly.

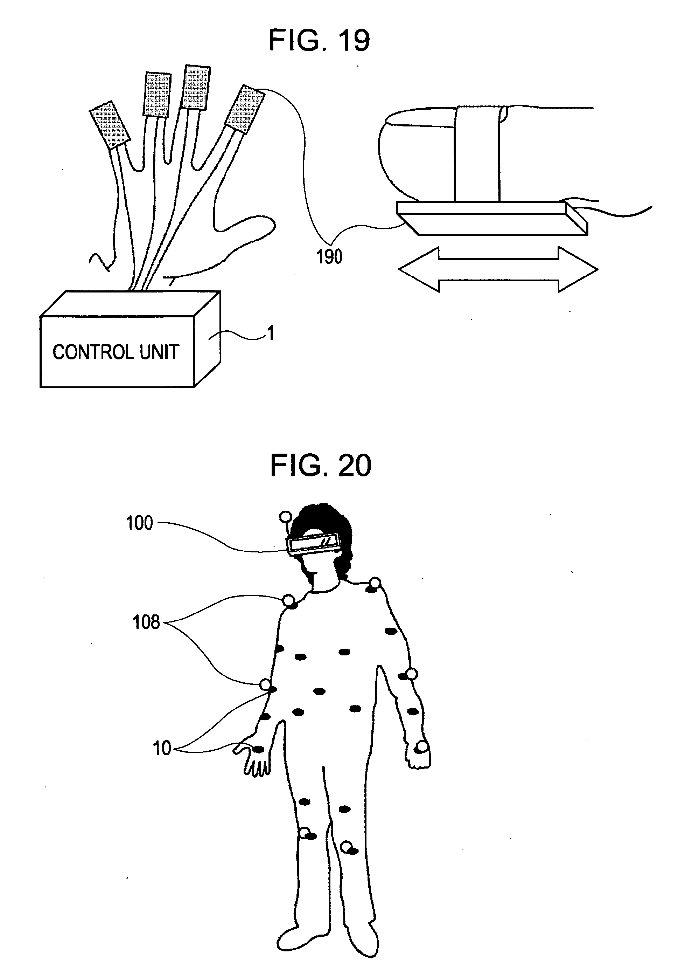

Now, a configuration example of an existing tactile-feedback device employing vibration motors is illustrated in Fig. 20. In Fig. 20, vibration motors 10 are put on the body of a user. Also, the user wears a head mount display 100 to observe virtual objects. Also, it is necessary to obtain the positional information of the user body to detect the contact with the virtual object, so markers 108 configured to detect a position are installed at the respective portions of the body. As for the markers, optical markers and image markers are employed. According to these configurations, the position and orientation of the user are detected, and the contact with the virtual object is determined, following which the vibration motor 10 which is put on the portion which is the closest portion to the contact portion is vibrated. Thus, the user perceives that the vibrated portion is in contact with the virtual object.

With the above-mentioned existing techniques, vibration motors are employed, so the contact with the virtual object can be readily taught to the user, but it has been difficult to present the user with information other than that.

Heretofore, with haptic displays and tactile displays, various types of attempts have been made to allow a user to perceive the feel of a virtual object shape or a virtual object surface.

On the other hand, vibration motors serving as simple actuators cannot perform a fine perceptual expression sufficiently. As for attempts to improve sensation using vibration motors, with Non-Patent Document 2, a vibration model is prepared for each wall material to present the type of contacted wall beforehand, vibration is provided based on the corresponding model at the time of contact with wall. However, with this method, allowing a user to perceive the material of each wall has not yet been completely successful.

As described above, vibration motors are small, inexpensive, and lightweight, so it has been possible to present the contact with a virtual object by installing the vibration motors in arbitrary portions, but it has been difficult to perform various types of expression other than the contact information. Particularly, it has been difficult to allow a user to perceive a plane or an object surface.

WO 02/27705 discloses a directional haptic feedback device. The device includes at least two actuator assemblies, which each include a moving inertial mass. A single control signal provided to the actuator assemblies at different magnitudes provide directional inertial sensations felt by the user.

US 6,087,942 discloses a tactile alert stimulation and massaging system for equipment such as a vehicle. The system includes a pad, a heater element, and motorized vibrators in respective regions of the pad. The vibrators allow a user to be massaged or to be alerted in response to drive signals.

SUMMARY OF THE INVENTION

US 2003/0011252 discloses a small flat device attached to the skin and containing a roto-oscillator which oscillates back and forth about an axis perpendicular to the skin. The oscillation is transferred to the skin by a circular friction pad on the underside of the device to provide a twisting vibratory sensation.

The present invention provides a tactile-feedback device whose expressive power is improved, such as allowing a user to perceive a plane or an object surface even using a stimulation means having a simple configuration such as a vibration motor. This is realized through the following arrangements.

The present invention in its first aspect provides a tactile-feedback device as specified in claims 1 to 9.

The present invention in its second aspect provides a tactile-feedback method as specified in claim 10.

Further features of the present invention will become apparent from the following description of exemplary embodiments with reference to the attached drawings.

BRIEF DESCRIPTION OF THE DRAWINGS

Fig. 1 is a diagram illustrating the configuration of a tactile-feedback device according to a first embodiment.
Fig. 2 is a diagram describing a cylindrical vibration motor.
Fig. 3 is a diagram describing a coin-type vibration motor.
Fig. 4 is a diagram describing a rotating member including a homogeneous rotor.
Fig. 5 is a diagram for describing the generation of torque by a vibration motor.
Fig. 6 is a diagram for describing the generation of torque by a plurality of vibration motors.
Fig. 7 is a diagram for describing a case in which there is overlapped time with the generation of torque by a plurality of vibration motors.
Fig. 8 is a diagram for describing a case in which there is blank time with the generation of torque by a plurality of vibration motors.
Fig. 9 is a diagram for describing a method arranged to control a plurality of vibration motors.
Fig. 10 is a diagram for describing a method arranged to control a plurality of vibration motors.
Fig. 11 is a diagram for describing a method arranged to control a plurality of vibration motors.
Fig. 12 is a diagram for describing a method arranged to control a plurality of vibration motors.
Fig. 13 is a diagram for describing a method arranged to control a plurality of vibration motors.
Fig. 14 is a diagram for describing a method arranged to control a plurality of vibration motors.
Fig. 15 is a diagram for describing a third embodiment.
Fig. 16 is a diagram for describing a fourth embodiment.
Fig. 17 is a diagram illustrating an example of wearing vibration motors.
Fig. 18 is a diagram illustrating an example of wearing vibration motors.
Fig. 19 is a diagram for describing a stimulation unit.
Fig. 20 is a diagram for describing a known tactile-feedback device.

DESCRIPTION OF THE EMBODIMENTS

First Embodiment

Description will be made below in detail regarding embodiments of the present invention with reference to the drawings.

First Embodiment

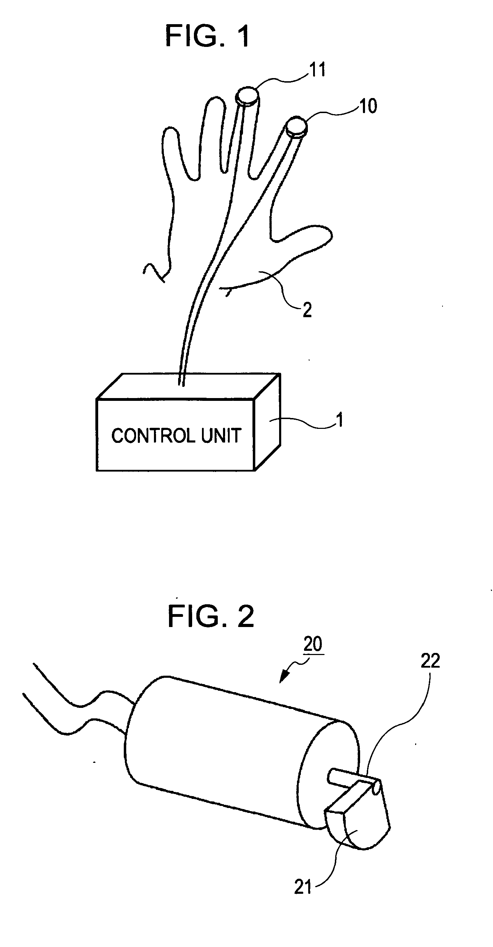

Fig. 1 is a diagram illustrating the configuration of a tactile-feedback device according to a first embodiment of the present invention. The tactile-feedback device shown in Fig. 1 comprises two vibration motors 10 and 11 serving as stimulation units, and a control unit 1 configured to control the operation of the vibration motors 10 and 11. In Fig. 1, an example is illustrated wherein the vibration motors 10 and 11 are put on fingertips, but the vibration motors may be put on any portion of a human body as long as the two vibration motors can be disposed in the same neighborhood to some extent.

The vibration motors are each put on a human body such that the revolution direction of the eccentric rotor is parallel to a skin surface of the human body. Also, though not particularly shown in Fig. 1, there are provided wearing portions configured to allow a user to wear the vibration motors on fingertips. The wearing portions are, for example, made up of an arrangement which allows the user to fix the vibration motor on a fingertip with a band, or an arrangement in which the user wears a finger sack or glove whose fingertip portion includes the vibration motor.

Note that the control unit 1 is made up of a personal computer including CPU, memory (ROM and RAM), external interface, and so forth, and the CPU executes a program stored in the memory, thereby performing control that will be described below.

Fig. 2 illustrates a cylindrical vibration motor which is employed as a stimulation unit. A cylindrical vibration motor 20 generates vibration by revolving an eccentric rotor 21 using electromagnetic force. Also, as for a stimulation unit, a coin-type vibration motor may be employed.

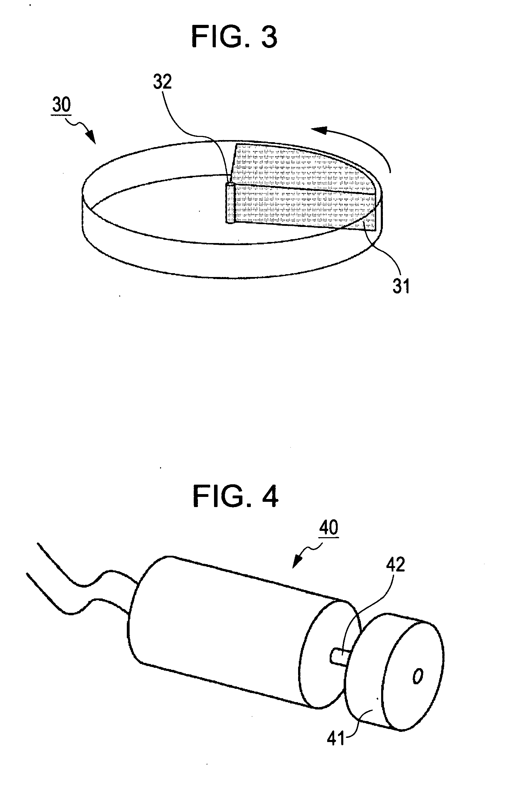

With a coin-type vibration motor 30, as shown in Fig. 3, an eccentric rotor 31 is rotated in parallel with the in-plane direction of a disk plane. Accordingly, as shown in Fig. 1, the coin-type vibration motor 30 is put on a skin surface such that the direction of the coin-type plate becomes parallel to the skin surface, whereby the revolution direction of the eccentric rotor 31 becomes parallel to the skin surface. In the event of employing a cylindrical vibration motor, the cylindrical vibration motor is put on a skin surface such that the revolution direction of the eccentric rotor 31 becomes parallel to the skin surface (revolution axis 32 is perpendicular to the skin surface).

With regard to the vibration motor, there is no particular difference between the cylindrical type and the coin type regarding operation thereof, so either one may be employed. However, it is necessary to install the vibration motor such that the revolution direction of the eccentric rotor is parallel to a skin surface of a human body, so it is desirable to employ the coin type from the perspective of space saving and ease of wearing. Note that Fig. 1 illustrates an example of wearing coin-type vibration motors on fingertips.

Also, the present embodiment has, as described later, features to employ torque generated by angular acceleration and deceleration for stimulation. Therefore, it is not necessary to employ a vibration motor having an eccentric rotor, and a vibration motor 40 including a homogeneous rotor 41 such as shown in Fig. 4 may be employed as a stimulation unit. Even in the event of employing the vibration motor 40, the vibration motor 40 is put on a skin surface such that the revolution direction of the rotor 41 becomes parallel to the skin surface (the revolution axis is perpendicular to the skin surface), and the torque generated by a revolution is so as to be perpendicular to the skin surface.

The torque in the direction perpendicular to the skin surface is generated by the vibration motor thus worn. Because a torque is generated by the rotor 41 perpendicular to the skin surface, a torque due to the reaction thereof is generated causing a rotational force to be applied parallel to the skin surface. According to the force applied to the skin surface, a skin deformation occurs on the skin surface, which can be expected to stimulate a Merkel's disc. The Merkel's disc is a sensory receptor classified as an SA receptor (slow adapting receptor), which is configured to detect a skin deformation. A human perceives the feel of pressure by the Merkel's disc being stimulated.

On the other hand, in the event that normal vibration is generated using a vibration motor, vibration around 100 through 200 Hz is generated, so a Pacinian corpuscle is principally stimulated. The Pacinian corpuscle is a sensory receptor classified as an RA receptor (rapid adapting receptor), which is configured to detect acceleration and vibration. A human perceives only simple vibration by the Pacinian corpuscle being stimulated.

As described above, generating the torque on a skin surface in the horizontal direction causes a human to perceive the feel different from the case of simply applying vibration.

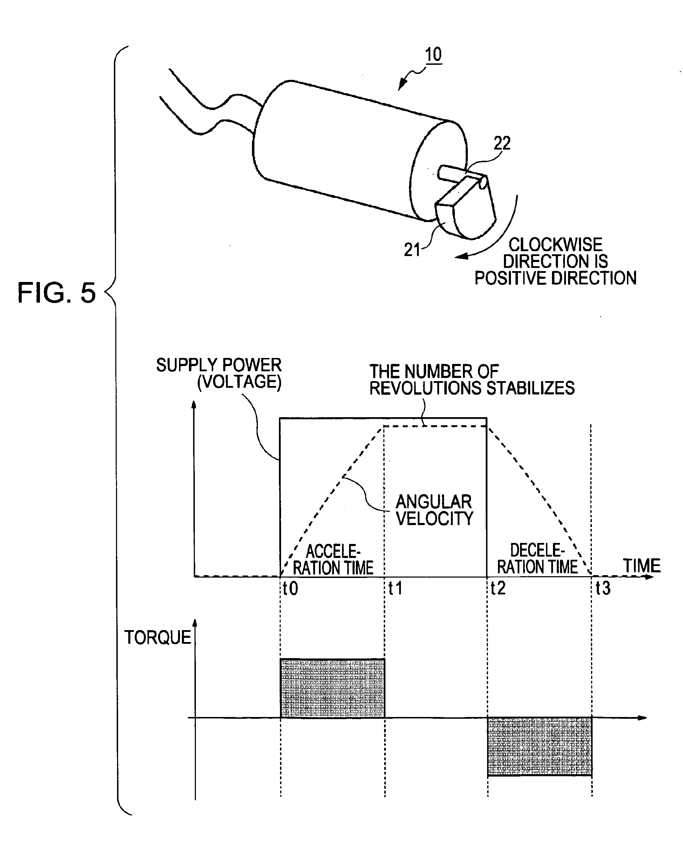

Next, description will be made regarding generation of torque by a vibration motor. Fig. 5 is a diagram for describing the generation of torque by a vibration motor. In Fig. 5, the eccentric rotor 21 of the vibration motor 10 revolves in the clockwise direction. Also, let us say that the clockwise direction is the positive revolution direction. Upon predetermined voltage being applied to the vibration motor 10 at time t0, the eccentric rotor 21 starts revolution, and the number of revolution stabilizes at time t1 after acceleration time. Angular velocity ω of the eccentric rotor 21 varies, so torque is generated in the positive direction. The revolution speed of the vibration motor stabilizes during time t1 through time t2, which provides a state wherein no torque is generated, but only vibration is generated.

Further, upon stopping application of voltage at time t2, the revolution speed of the eccentric rotor 21 decelerates, and stops at time t3. During deceleration the angular velocity ω of the eccentric rotor 21 varies, so torque and a force in the counterclockwise direction is generated. The above-mentioned description can be understood from the following expressions.

When assuming that angular momentum is L, moment of inertia is I, and angular velocity is ω, the following expression holds.

$$L = I\omega \quad \ldots (1)$$

Torque N is obtained with

$$N = \frac{\partial L}{\partial t} = \omega\frac{\partial I}{\partial t} + I\frac{\partial \omega}{\partial t} \quad \cdots\cdots\cdots\cdots (2)$$

so torque is generated during a period wherein angular velocity varies. Note that even in the event of employing a rotating member having no eccentricity, the generation principle of torque is the same.

In Fig. 5, the vibration motor is driven by voltage control to generate torque. More specifically, torque is generated by switching a state of applying no voltage and a state of applying voltage. This voltage control is for generating torque by changing the angular velocity of the eccentric rotor 21, so a method for controlling voltage is not restricted to the above-mentioned description. For example, it is not necessary to completely stop voltage application, so torque may be generated by changing voltage in a range of arbitrary voltage values.

More specifically, control may be made wherein torque is generated by changing voltage values between 1 V and 3 V. Also, an arbitrary value may be employed for this voltage value. Further, as for a state of generating no torque as well, a state in which the number of revolution of the eccentric rotor 21 stabilizes by continuously applying a predetermined voltage value may be employed as well as a state of applying no voltage.

This method for controlling a vibration motor is not restricted to control by changing voltage. For example, with regard to motor control, common PWM (Pulse Width Modulation) control may be employed. In the case of PWM control, the angular velocity of the eccentric rotor 21 is changed by changing a duty ratio. Even in the event of changing a duty ratio, the value of a duty ratio may be set arbitrarily as with the case of changing a voltage value.

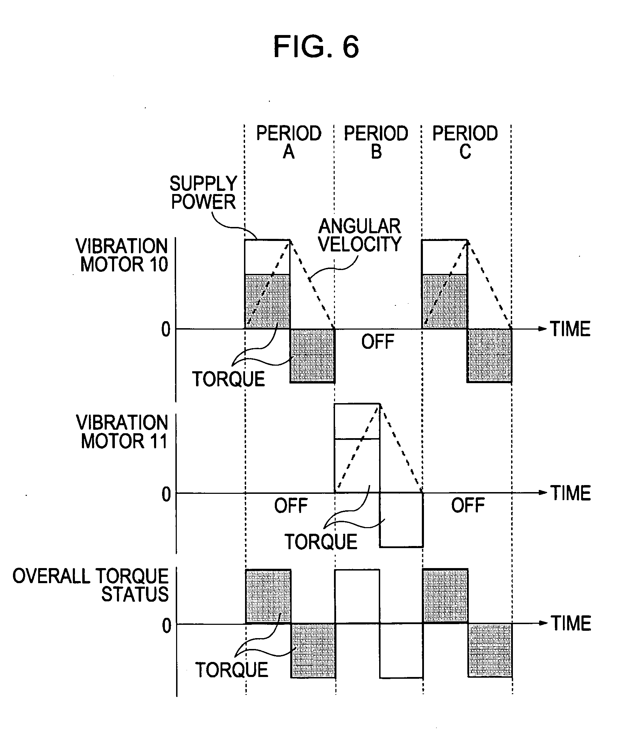

Fig. 6 is a diagram describing the operation of the vibration motor according to the first embodiment. In Fig. 1, an arrangement has been illustrated wherein the vibration motors 10 and 11 are each put on fingertips. Fig. 6 illustrates the driving states of the vibration motors 10 and 11 shown in Fig. 1.

First, power is supplied to the vibration motor 10 during a period A, and the eccentric rotor of the vibration motor 10 starts revolution. Torque in the positive direction is generated from an idle state until the time when the angular velocity of the eccentric rotor increases (acceleration time). Further, during the period A power supply is stopped before the revolution speed of the eccentric rotor stabilizes. According to stopping of power supply, the angular velocity of the eccentric rotor decelerates, and ultimately stops. According to deceleration of the eccentric rotor, torque in the negative direction, which is the opposite direction at the time of acceleration, is generated. The above is the behavior of the vibration motor 10 during the period A. During this period A, the vibration motor 11 stops.

Next, during a period B the vibration motor 10 is in an idle state, and the vibration motor 11 generates torque in the positive or negative direction depending on power supply or stopping of power as with the vibration motor 10 during the period A. Also, further during a period C, the vibration motor 10 generates torque, and the vibration motor 11 is in an idle state.

The torque generated by the vibration motors 10 and 11 can be summarized in a time-oriented manner as a state in which torque is always generated as a whole, such as shown in the whole torque status (the bottom of the drawing).

The control such as described above is repeatedly performed as to the two vibration motors based on predetermined conditions, whereby force is alternately applied to nearby different human body portions (with the first embodiment, the index finger and the middle finger) in a direction parallel to the skin surface.

Thus, force is applied to a plurality of portions of a human body in a time-oriented manner, thereby allowing a user to perceive a continuous relation between the different human body portions. Particularly, a force is applied to the skin surface, so it can be expected to continuously stimulate the Merkel's disc. Consequently, according to the continuous feel of pressure, as with the case of touching a plane actually, the feel can be presented to a user wherein the user perceives the spatial relation of an object plane, as it were, touches an object surface.

With the control method shown in Fig. 6, it is necessary to stop power supply before the angular velocity of the eccentric rotor stabilizes. The time from supply of power to stopping of power is set beforehand. This can be done wherein the time from a state in which the eccentric rotor stops until the eccentric rotor reaches stabilized velocity revolution by power supply is measured beforehand, and all that is necessary is to set the time from supply of power to stopping of power so as to be within the measured time.

Note that the acceleration time of the eccentric rotor differs depending on the type, shape, and so forth of the vibration motor, but is generally 100 msec or so in the case of a small DC vibration motor. On the other hand, the next time until power is supplied to the vibration motor after stopping of power may be also determined by measuring the deceleration time of the eccentric rotor in the same way beforehand.

Also, as for another method, an arrangement may be made wherein there is provided a sensor configured to measure the revolution status of the eccentric rotor, and power supply is stopped, or power is supplied to the next vibration motor, at a point of reaching predetermined angular velocity or number of revolutions.

Also, with the timing of generating torque of the two vibration motors, generation and stopping have been completely alternated in Fig. 6, but the timing is not restricted to this as long as its range is in a range having no influence to the user's perception.

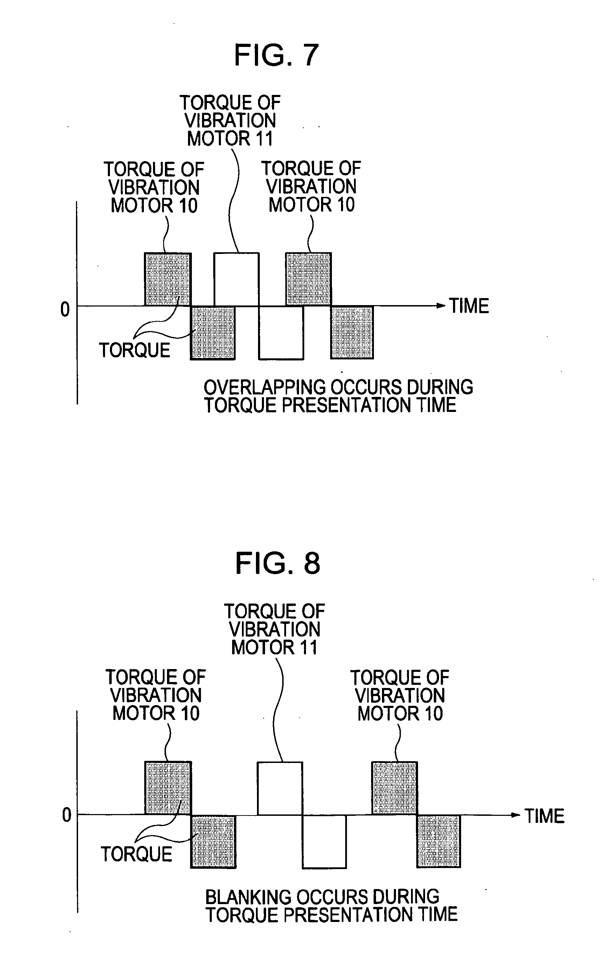

Figs. 7 and 8 illustrate diagrams representing torque generated at the two vibration motors in a time-oriented manner. The timing of generating torque, as shown in Fig. 7, may be in a state in which overlapping occurs during the time of presenting torque, or a state in which a blank occurs during the time of presenting torque as shown in Fig. 8. The overlap time or intervals between generations of torque may be set in any way that allows a user to perceive a plane or object surface, in this embodiment of the invention.

The optimal or permissible overlapped time or blank time of torque differs depending on a human body portion to which stimulus is given, and the individual difference of perception, so it is desirable to set optimal time for each user beforehand.

Also, with the example shown in Fig. 6, control has been performed by coupling torque in the positive direction and torque in the negative direction as one torque generation period, but control of the torque generating timing of a plurality of vibration motors is not restricted to this.

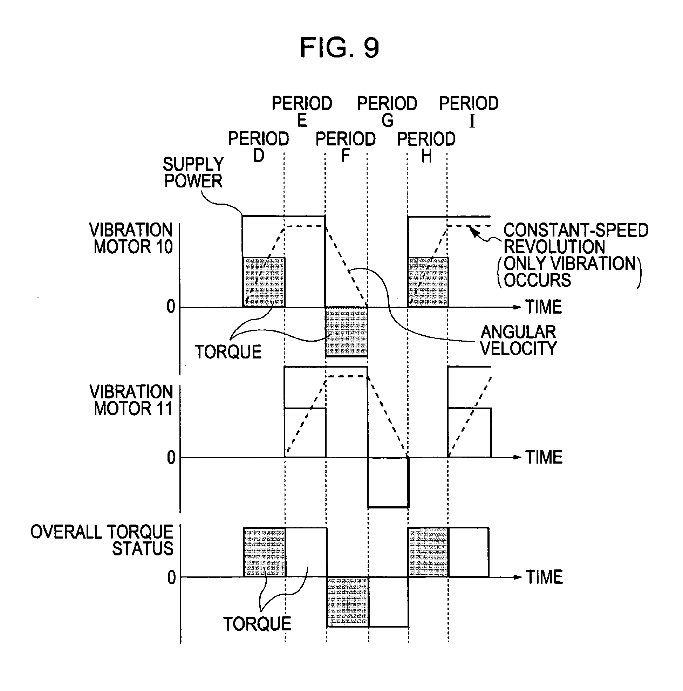

In Fig. 9, an example is illustrated wherein with two vibration motors, torque in the positive direction generated by acceleration of the eccentric rotor is continuously presented, and subsequently, torque in the negative direction generated by deceleration of the eccentric rotor is continuously presented. During a period D shown in Fig. 9 the vibration motor 10 is in an accelerated state, and torque in the positive direction is generated at the vibration motor 10. During the next period E the vibration motor 10 is in a state of stabilized revolution, wherein torque is not generated, and the vibration motor 11 is in an accelerated state, wherein torque in the positive direction is generated at the vibration motor 11. During the next period F the vibration motor 10 is in a decelerated state, wherein torque in the negative direction is generated. During the next period G the vibration motor 11 is in a decelerated state, wherein torque in the negative direction is generated. With the control such as shown in the above also, torque is generated alternately at the vibration motor 10 and vibration motor 11 as the whole torque behavior, which can allow a user to perceive a plane and an object surface.

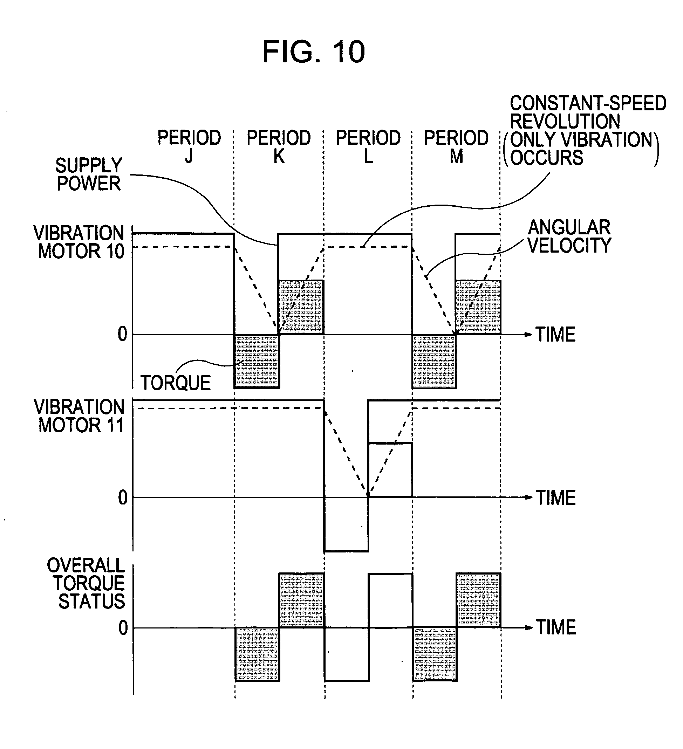

Also, further, in Fig. 10, control is illustrated wherein during a period in which torque is not generated the eccentric rotor is arranged to be in a state of stabilized revolution. With this example, the acceleration and deceleration of the eccentric rotors of the vibration motors are inverted, as compared with the example shown in Fig. 6. However, torque is not generated at the stabilized revolution of the eccentric rotors, which enables a state of generating torque alternately at the vibration motor 10 and vibration motor 11 as a whole.

Note that with the example shown in Fig. 10, the case has been shown wherein the eccentric rotors are revolved in a stabilized manner during a period of no torque being generated, but vibration is generated at the time of the stabilized revolution of the eccentric rotors, so a case can be conceived wherein the vibration thereof prevents a user from perceiving a plane. Therefore, as shown in Fig. 6, it is desirable to stop the revolution of the eccentric rotors during a period of no torque being generated.

The tactile-feedback device having such a configuration, even in the event of employing a simple stimulation unit such as a vibration motor, can perform a high grade perceptual presentation such as allowing a user to perceive a plane and an object surface. With stimulus employing an existing vibration motor, only simple vibration stimulus is performed, and as for countermeasures to present complex stimulus, there are provided simply changing a vibration length pattern, and simply changing a vibration frequency.

With the present embodiment, torque generated along with an angular velocity fluctuation of an eccentric rotor is given to the direction horizontal to the in-plane direction of a skin surface. Further, torque is alternately generated by a plurality of vibration motors, thereby enabling a user to perceive a plane and an object surface. Thus, expressive power can be improved without adding a particular modification to vibrating devices. Second Embodiment

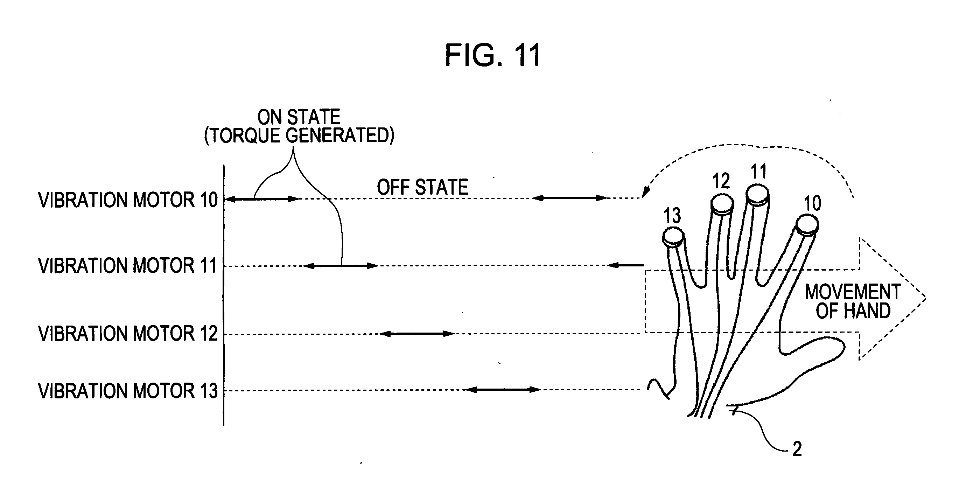

With the first embodiment, an example including the two stimulation units has been shown, but the number of stimulation units may be greater than two. For example, Fig. 11 illustrates an example in the case of wearing coin-type vibration motors 10 to 13 serving as stimulation units on four fingers.

Hereafter, a state in which a stimulation unit generates force that a human body can perceive will be referred to as an ON state, and a state in which a stimulation unit generates no force that a human body can perceive will be referred to as an OFF state.

Particularly, in the event of employing a vibration motor as a stimulation unit, a state in which torque is generated by the acceleration and deceleration of the eccentric rotor, and force that a human body can perceive is generated parallel to a skin surface will be referred to as an ON state. Also, a state in which torque is not generated by the acceleration and deceleration of the eccentric rotor, and force that a human body can perceive is not generated will be referred to as an OFF state.

Even with an example including two or more stimulation units, such as the first embodiment, an ON state and an OFF state are set in a predetermined cycle, and control is performed so as to shift one of the cycles of at least the two stimulation units, thereby allowing a user to perceive a plane and an object surface.

Description will be made below regarding a control method of a plurality of vibration motors using an example. First, in Fig. 11, a plurality of vibration motors are controlled so as to turn to an ON state in the order of the vibration motor 10 to vibration motor 13. According to this control, force is applied in the direction horizontal to the in-plane direction of a skin surface in the order of the index finger, middle finger, third finger, and little finger. Consequently, the feel can be presented wherein four fingers touch a plane. Particularly, the vibration motors are turned to an ON state in the order of wearing order, so as shown in the drawing, it is desirable to perform such control when touching a virtual object surface while moving the hand.

Note that in Fig. 11, following turning the vibration motors to an ON state in the order of the vibration motors 10 to 13, control is performed so as to turn the vibration motors to an ON state in the order of the vibration motors 10 to 13 again, but the actual operation is not restricted to this. For example, an arrangement may be made wherein the vibration motors are turned to an ON state in the order of the vibration motors 10 to 13 only once.

Also, for the sake of description in Fig. 11, all the vibration motors have been operated, but it is not always necessary to operate all, and a vibration motor to be operated may be selected depending on a situation. A control method other than the method shown in the drawing may be employed, which can be applied to the descriptions of the following other drawings.

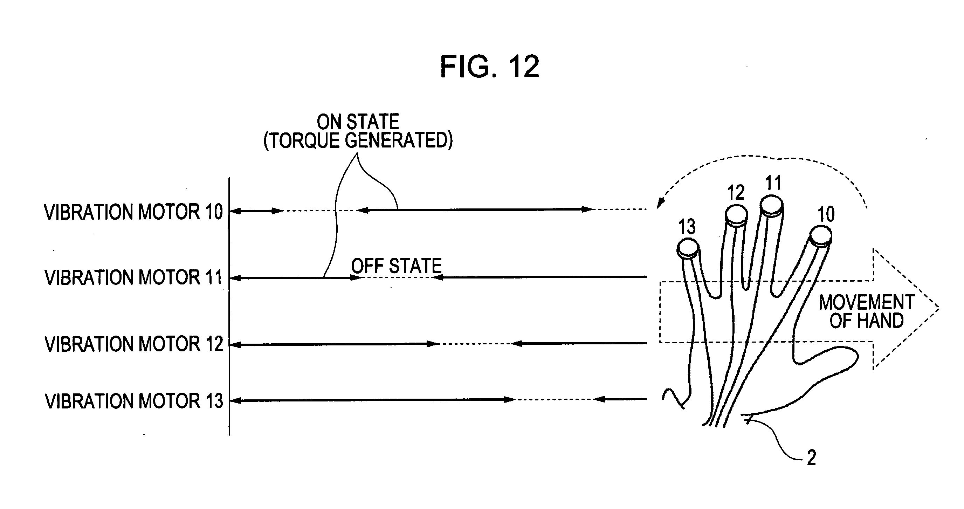

Next, in Fig. 12, contrary to Fig. 11, a plurality of vibration motors are controlled so as to turn to an OFF state in the order of the vibration motors 10 to 13. Even with this control, the same advantage as the control in Fig. 11 can be obtained.

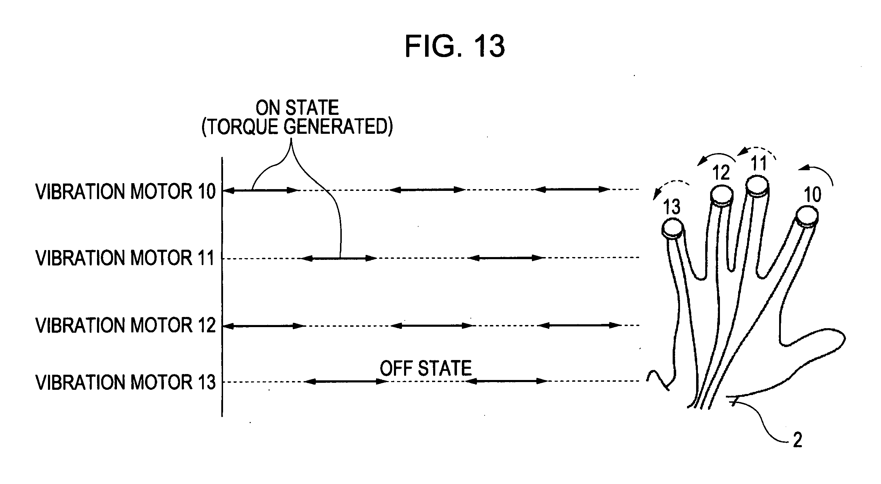

Also, in Fig. 13, adjacent vibration motors are controlled so as to turn to an ON state and an OFF state alternately. Such control is performed, thereby enabling a user to perceive the feel of touching an object surface without moving the hand relatively.

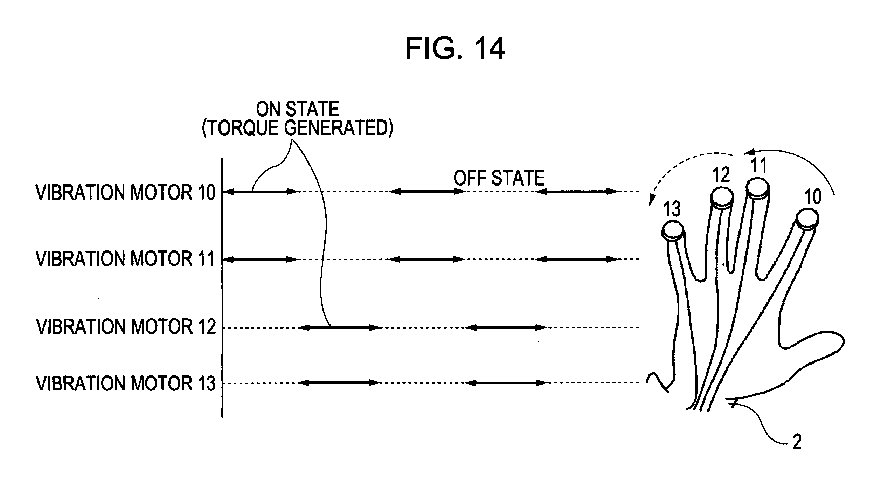

Also, in Fig. 14, a group of vibration motors are formed, and the vibration motors are controlled so as to turn to an ON state and an OFF state alternately. A group such as Fig. 14 is formed and operated, and torque of the plurality of vibration motors can be synthesized, whereby the feel of touching an object surface with relatively strong force can be presented to a user.

Note that formation of the group is not restricted to adjacent vibration motors, so the group may be formed with vibration motors whose positions are apart. The example shown in Fig. 13 can be mentioned as one example form wherein the group shown in Fig. 14 is formed and operated. Also, a group formation is not restricted to a group made up of equal number of vibration motors, so a group formation whose number of vibration motors is biased may be employed. Also further, the number of groups is two in Fig. 14, but the number of groups is not restricted to this, so two or more groups may be formed.

Also, a method arranged to select vibration motors to be turned to an ON state or OFF state at random may be employed as well as the above-mentioned control method. Also, time wherein all the vibration motors are in an ON state, or time wherein all the vibration motors are in an OFF state may be included, as long as it does not prevent perception from being presented.

Third Embodiment

With the perceptual presentation of the present invention, a display can be employed on which a virtual object is displayed, besides the vibration motors. As for the display, a liquid crystal, plasma, CRT, projector, head mount display (HMD), and so forth may be employed.

Also, the feel of touching an object surface may be presented depending on the relation between an actual human body position and a virtual object position together with a method arranged to detect a human body position. As for a detection method of a human body position, methods may be employed such as a method employing markers and a camera, a method arranged to determine a human body shape using image processing, a technique employing a magnetic sensor, acceleration and angular velocity sensor, magnetic sensor, or the like.

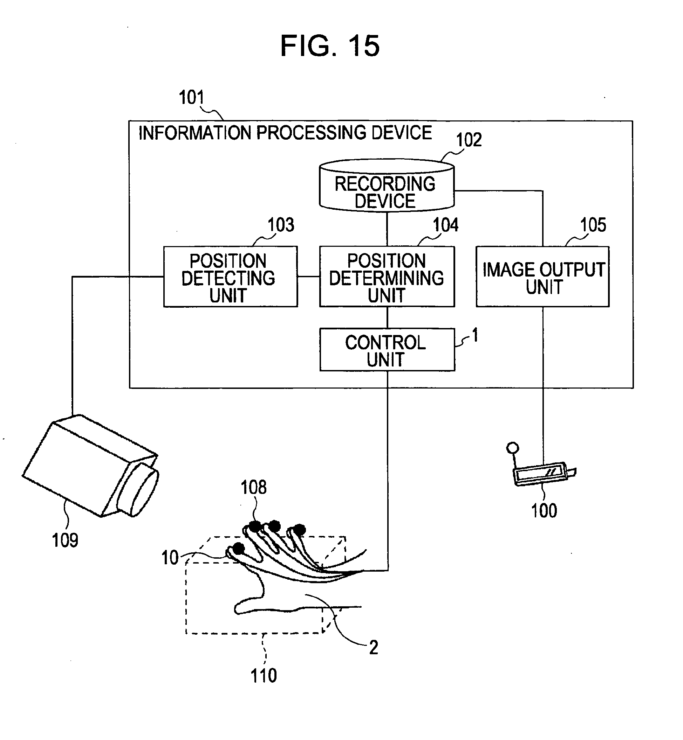

Fig. 15 illustrates a tactile-feedback device made up of a head mount display 100 as a display, and a method employing markers 108 and a camera 109 as a position-detection method. Description will be made below regarding the configuration in Fig. 15.

A human body 2 wears a plurality of vibration motors 10. In Fig. 15, an example is shown wherein the vibration motors 10 are put on fingertips, but may be put on any portions of a human body. In Fig. 15, in order to obtain the position of the human body 2, there are provided the markers 108, the camera 109, and a position-detecting unit 103 within an information processing device 101.

Information of the position, appearance, and shape of a virtual object is recorded in a recording device 102. A position-determining unit 104 determines the position of the human body output by the position-detecting unit 103, and the positional relation with the virtual object recorded in the recording device 102. Thus, the distance between the human body and the virtual object, and whether or not there is contact, are determined. Note that these can be realized by employing known techniques, so description thereof will be omitted.

A control unit 1 instructs the vibration motors to perform vibration based on the contact determination result of the position-determining unit 104 to allow a user to perceive contact with the virtual object. Particularly, in the case of touching a virtual object surface, the control unit 1 controls the vibration motors to generate torque alternately to present the feel of touching the object surface to the user.

In Fig. 15, the positions of the vibration motors 10 and the markers 108 are the same portions of the human body, so the position-detecting unit 104 needs to determine the contact between the marker positions and the virtual object to determine the contact between the human body and the virtual object. Also, a method may be employed wherein the shape of the human body in a real space is applied to a human body model in a virtual space, thereby performing contact determination with the virtual object. With this method, for example, markers installed in a plurality of positions of a human body, and a human body model which is prepared beforehand are employed, and the position and orientation of the human body model is obtained at the position-detecting unit 103.

The position-determining unit 104 configured to detect the contact between the human body and the virtual object employing the position and orientation of the human body model. According to this method, the human body is employed, whereby the positions of human body portions where markers are not worn can be also presumed, and also contact determination can be performed.

Also, in Fig. 15, the virtual object recorded in the recording device 102 is displayed on the head mount display 100 via an image output unit 105. Thus, the user can obtain tactile information by the vibration motors 10 while visually comprehending the virtual object 110 through the head mount display 100.

Fourth Embodiment

With the above-mentioned embodiments, description has been made regarding a method arranged to allow the user to perceive the object surface. With an existing contact-determination method employing vibration motors, vibration is generated at the vibration motors at the time of contact with a virtual object, thereby allowing a user to perceive the contact with the virtual object, but the third embodiment may be combined with this existing method.

For example, in the event that a human body exists on a surface position of a virtual object, as described in the above-mentioned embodiments, vibration motors are controlled so as to allow a user to perceive the object surface. In the event that a human body exists in a deep portion of a virtual object, the vibration motors are vibrated, thereby allowing the user to perceive the contact with the virtual object.

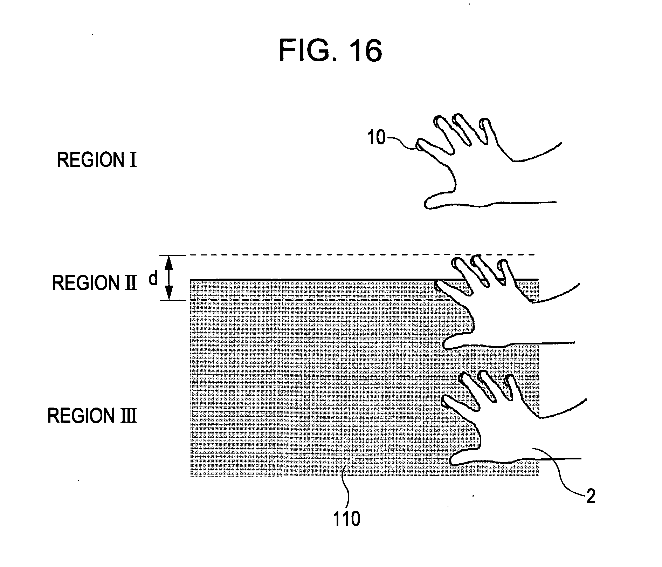

In Fig. 16, a diagram describing an example of switching this control is illustrated. Fig. 16 illustrates a state in which the plurality of vibration motors 10 are worn on the human body 2 (fingertips) such that the revolution direction parallel with a skin surface, and the positional relation with the virtual object 110.

In Fig. 16, a region I is a separate space which has no relation with the virtual object 110, and in the event that the human body exists in this position, the vibration motors 10 are not operated.

Next, a region II is a region having a predetermined range d including the surface of the virtual object 110. In the event that the human body exists in this region II, the vibration motors 10 are controlled to generate torque alternately to allow the user to perceive the object surface. Further, a region III is a region inside the virtual object 110. In the event that the human body 2 exists in the region III, the vibration motors 10 are continuously vibrated or vibrated with a predetermined vibration pattern to give the user vibration stimulus. According to this vibration stimulus, the user can determine whether or not his/her body has penetrated into the virtual object 110.

Fifth Embodiment

With the above-mentioned embodiments, description has been made regarding an example wherein vibration motors are worn on fingertips, but the wearing position of a stimulation unit is not restricted to fingertips.

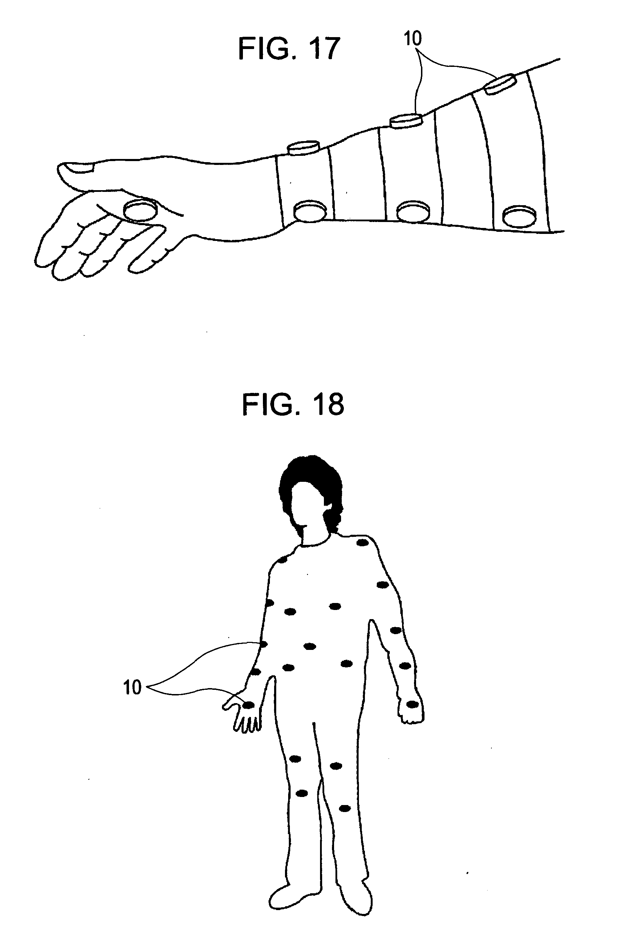

For example, in Fig. 17, an example is illustrated wherein the plurality of vibration motors 10 are worn in a range from the wrist to the elbow. Even with such a wearing method, according to the control method described in the above embodiments, the user is allowed to perceive an object surface. Also, it is necessary to appropriately select the plurality of vibration motors to generate torque based on the contact position with a virtual object, and wearing positions.

Also, in Fig. 18, an example is illustrated wherein vibration motors 10 are worn on the entire human body, but the above can be applied to this case. Note that in Figs. 17 and 18, the control unit and so forth are omitted.

As described above, there is no restriction regarding the wearing position of a stimulation unit, but it is desirable to wear adjacent stimulation units in the same neighborhood to some extent so as to allow the user to perceive the force of the stimulation unit continuously. The optimal distance between the stimulation units differs depending on the portion of the human body.

Sixth Embodiment

With the above-mentioned embodiments, an example has been principally described wherein vibration motors are employed as stimulation units, but other configurations may be employed as stimulation units. That is to say, any configuration may be employed as long as it is a configuration wherein force can be generated parallel to the skin surface. As one example thereof, description has been made wherein torque generated at a rotating member is employed. A driving method of vibration motors and a rotating member is not restricted to an electromagnetic method, so what kind of method may be employed.

Also, as for a method arranged to generate torque, a method arranged to change the angular velocity of an eccentric rotor or rotor has been described, but as shown in Expression (2), it may be made to change moment of inertia temporally. Moment of inertia is defined with

$$I = \sum_i m_i r_i^2 \cdot \cdot \cdot \cdot \cdot \cdot \cdot \cdot \cdot (3)$$

Consequently, torque is generated by temporally changing the mass of a material point, or the distance from the medial axis of the eccentric rotor or rotor. Here, m represents the mass of a material point, and r represents the distance from the medial axis.

As for a method other than the method employing torque, as shown in Fig. 19, a plate-like object 190 which moves in parallel to a skin surface may be employed as a stimulation unit. The stimulation unit 190 moves in the horizontal direction by an actuator such as an electromagnetic motor, an ultrasonic motor, a polymer actuator, an electrostatic actuator, a shape memory alloy, air-pressure control, a piezo-electric element, or the like. The stimulation unit 190 moves in parallel to the skin surface, thereby applying force parallel to the skin. A plurality of such stimulation units 190 are provided, driven alternately, and stopped, thereby allowing a user to perceive the spread of a plane and an object surface.

Seventh Embodiment

With the above-mentioned embodiments, an example has been shown wherein the stimulation units are worn on the human body, but the usage of the present invention is not restricted to wearing on a human body. For example, an arrangement may be made wherein a plurality of stimulation units are provided in an existing input device such as a mouse, pointing device, game controller, or the like, thereby allowing a user to perceive an object surface.

While the present invention has been described with reference to exemplary embodiments, it is to be understood that the invention is not limited to the disclosed exemplary embodiments. The scope of the following claims is to be accorded the broadest interpretation so as to encompass all modifications, equivalent structures and functions.

**Claims**

1. A tactile-feedback device configured to present a pressure perception to a user, comprising:

   a plurality of stimulation means (10, 11); and
   control means (1) configured to set a first state and a second state of the stimulation means (10, 11) with a predetermined cycle,
   wherein the control means (1) is configured to control the at least two stimulation means (10, 11) to have different cycles;
   **characterised in that**
   said plurality of stimulation means (10,11) are each configured to apply a rotational force parallel to the skin surface of the user, the axis of rotation being normal to the skin surface, so as to cause skin deformation for presenting the pressure perception to the user.

2. A tactile-feedback device according to Claim 1, wherein the pressure perception is of a plane and/or object surface.

3. A tactile-feedback device according to Claim 1, wherein the stimulation means comprises a rotor, and is arranged to generate a force parallel to a skin surface using torque generated by varying the angular velocity of the rotor to present stimulus to a user.

4. A tactile-feedback device according to Claim 3, wherein the stimulation means includes a vibration motor.

5. A tactile-feedback device according to Claim 1, further comprising:

   a display apparatus (100) configured to display a virtual object visually;
   wherein the control means is configured to perform control based on the positional relation between the virtual object and the stimulation means in a virtual space.

6. A tactile-feedback device according to Claim 1, further comprising:

   position-detection means (103) configured to detect the position of the user; and
   contact-determining means configured to determine the contact between the user and a virtual object;
   wherein the control means is configured to perform control based on the determination result of the contact determining means.

7. A tactile-feedback device according to claim 1 configured to present a virtual object,
   wherein the control means is configured to control the at least two stimulation means (10, 11, 12, 13) to have different cycles when the user is positioned within a predetermined range of the surface of the virtual object (110).

8. A tactile-feedback device according to claim 1, wherein the
   control means (1) is configured to set at least one stimulation means (10) to a first state, and set at least one other stimulation means (10) to a second state, and to perform control to sequentially change the state of the stimulation means (10) which are in a first state or in a second state after predetermined time lapses.

9. A tactile-feedback device according to any of claims 1 to 8, wherein the first state of the stimulation means is an ON state and the second state of the stimulation means is an OFF state.

10. A tactile-feedback method for presenting a pressure perception to a user using at least two stimulation means (10, 11), comprising:

    a control step of setting a first state and a second state of the at least two stimulation means (10, 11) with a predetermined cycle, such that at least two of the stimulation means have different cycles (10, 11);
    **characterised in that**
    each of the at least two stimulation means applies a rotational force parallel to the skin surface of the user, the axis of rotation being normal to the skin surface, so as causing skin deformation for presenting the pressure perception to the user.

11. A tactile-feedback method according to claim 10 including a step of presenting a virtual object (110)
    wherein the control step includes controlling drive of each of the at least two stimulation means (10) placed on a body of a user when the user is positioned within a predetermined range of the surface of the virtual object (110).

12. A tactile-feedback method according to claim 10 the control step comprising:

    a first control step arranged to set at least one stimulation means (10, 11) to a first state, and set at least one other stimulation means (10, 11) to a second state, of the at least two stimulation means (10, 11) placed on a body of the user; and
    a second control step of sequentially changing the state of the stimulation means (10, 11) which are in a first state or in a second state after predetermined time lapse.

13. A tactile-feedback method according to any one of claims 10 to 12, wherein the first state of the stimulation means is an ON state and the second state of the stimulation means is an OFF state.

14. A program that, when run on control means, performs a method according to claims 10 to 13.

**15.** A storage medium storing a program according to claim 14.

**Patentansprüche**

**1.** Taktilrückkopplungseinrichtung, konfiguriert, um einem Benutzer ein Druckempfinden zu vermitteln, umfassend:

mehrere Stimulationseinheiten (10, 11); und
eine Steuereinheit (1), konfiguriert zum Einstellen eines ersten Zustands und eines zweiten Zustands der Stimulationseinheiten (10, 11) mit einem vorbestimmten Zyklus,
wobei die Steuereinheit (1) konfiguriert ist zum Steuern der mindestens zwei Stimulationseinheiten (10, 11) derart, dass diese verschiedene Zyklen aufweisen;
**dadurch gekennzeichnet, dass** die mehreren Stimulationseinheiten (10, 11) jeweils konfiguriert sind zum Aufbringen einer Drehkraft parallel zur Hautoberfläche des Benutzers, wobei die Drehachse lotrecht zur Hautoberfläche verläuft, um eine Hautverformung zu veranlassen, die dem Benutzer ein Druckempfinden vermittelt.

**2.** Einrichtung nach Anspruch 1, wobei das Druckempfinden dasjenige einer Ebene und/oder einer Objektoberfläche ist.

**3.** Einrichtung nach Anspruch 1, wobei die Stimulationseinheit einen Rotor umfasst und dazu ausgebildet ist, eine Kraft parallel zu einer Hautoberfläche unter Verwendung von Drehmoment zu erzeugen, welches erzeugt wird durch Variieren der Winkelgeschwindigkeit des Rotors, um dem Benutzer einen Stimulus zu vermitteln.

**4.** Einrichtung nach Anspruch 3, wobei die Simulationseinheit einen Vibrationsmotor enthält.

**5.** Einrichtung nach Anspruch 1, weiterhin umfassend:

eine Anzeigevorrichtung (100), konfiguriert zum visuellen Anzeigen eines virtuellen Objekts;
wobei die Steuereinheit konfiguriert ist zum Ausführen einer Steuerung basierend auf der Positionsbeziehung zwischen dem virtuellen Objekt und der Stimulationseinheit in einem virtuellen Raum.

**6.** Einrichtung nach Anspruch 1, weiterhin umfassend:

eine Positionserkennungseinheit (103), konfiguriert zum Erkennen der Position des Benutzers; und
eine Kontaktermittlungseinheit, konfiguriert zum Ermitteln des Kontakts zwischen dem Benutzer und einem virtuellen Objekt;
wobei die Steuereinheit konfiguriert ist zum Ausführen einer Steuerung basierend auf dem Ermittlungsergebnis von der Kontaktermittlungseinheit.

**7.** Einrichtung nach Anspruch 1, konfiguriert zum Präsentieren eines virtuellen Objekts,
wobei die Steuereinheit konfiguriert ist zum Steuern der mindestens zwei Stimulationseinheiten (10, 11, 12, 13) derart, dass diese verschiedene Zyklen haben, wenn der Benutzer innerhalb eines vorbestimmten Bereichs der Oberfläche des virtuellen Objekts (110) positioniert ist.

**8.** Einrichtung nach Anspruch 1, wobei die Steuereinheit (1) konfiguriert ist zum Einstellen mindestens einer Stimulationseinheit (10) in einen ersten Zustand, und zum Einstellen mindestens einer anderen Stimulationseinheit (10) in einen zweiten Zustand, und zum Ausführen einer Steuerung zum sequentiellen Ändern des Zustands der Stimulationseinheiten (10), die sich in einem ersten Zustand oder in einem zweiten Zustand befinden, nachdem eine vorbestimmte Zeit verstrichen ist.

**9.** Einrichtung nach einem der Ansprüche 1 bis 8, wobei der erste Zustand der Stimulationseinheit ein EIN-Zustand und der zweite Zustand der Stimulationseinheit ein AUS-Zustand ist.

**10.** Taktilrückkopplungsverfahren, um einem Benutzer unter Verwendung von mindestens zwei Stimulationseinheiten (10, 11) ein Druckempfinden zu vermitteln, umfassend:

einen Steuerschritt zum Einstellen eines ersten Zustands und eines zweiten Zustands der mindestens zwei Stimulationseinheiten (10, 11) mit einem vorbestimmten Zyklus derart, dass mindestens zwei der Stimulationseinheiten verschiedene Zyklen (10, 11) aufweisen;

**dadurch gekennzeichnet, dass** jede der mindestens zwei Stimulationseinheiten eine Drehkraft parallel zur Hautoberfläche des Benutzers aufbringt, wobei die Drehachse lotrecht zur Hautoberfläche verläuft, um eine Hautverformung zu veranlassen, die dem Benutzer ein Druckempfinden vermittelt.

**11.** Verfahren nach Anspruch 10,
enthaltend einen Schritt zum Präsentieren eines virtuellen Objekts (110),
wobei der Steuerschritt die Steuerung des Treibens jeder von den mindestens zwei Stimulationseinheiten (10) an einem Körper eines Benutzers enthält, wenn der Benutzer innerhalb eines vorbestimmten Bereichs der Oberfläche des virtuellen Objekts (110) positioniert ist.

**12.** Verfahren nach Anspruch 10,
wobei der Steuerschritt umfasst:

einen ersten Steuerschritt, ausgebildet zum Einstellen mindestens einer Stimulationseinheit (10, 11) in einen ersten Zustand und zum Einstellen mindestens einer weiteren Stimulationseinheit (10, 11) in einen zweiten Zustand, von den mindestens zwei an einem Körper des Benutzers platzierten Stimulationseinheiten (10, 11); und
einen zweiten Steuerschritt des sequentiellen Änderns des Zustands der Simulationseinheiten (10, 11), die sich in einem ersten oder in einem zweiten Zustand befinden, nachdem eine vorbestimmte Zeit verstrichen ist.

**13.** Verfahren nach einem der Ansprüche 10 bis 12, wobei der erste Zustand der Stimulationseinheit ein EIN-Zustand und der zweite Zustand der Stimulationseinheit ein AUS-Zustand ist.

**14.** Programm, welches, wenn es auf einer Steuereinheit läuft, ein Verfahren nach den Ansprüchen 10 bis 13 ausführt.

**15.** Speichermedium, das ein Programm nach Anspruch 14 speichert.

**Revendications**

**1.** Dispositif à retour tactile configuré pour présenter la perception d'une pression à un utilisateur, comprenant :

une pluralité de moyens de stimulation (10, 11) ; et
un moyen de commande (1) configuré pour régler un premier état et un deuxième état du moyen de stimulation (10, 11) selon un cycle prédéterminé,
dans lequel le moyen de commande (1) est configuré pour commander les au moins deux moyens de stimulation (10, 11) afin qu'ils aient des cycles différents ;
**caractérisé en ce que** ladite pluralité de moyens de stimulation (10, 11) sont chacun configurés pour appliquer une force de rotation parallèle à la surface de la peau de l'utilisateur, l'axe de rotation étant normal à la surface de la peau, de façon à provoquer une déformation de la peau permettant de présenter à l'utilisateur la perception d'une pression.

**2.** Dispositif à retour tactile selon la revendication 1, dans lequel la perception d'une pression est celle d'une surface d'un objet ou d'un plan.

**3.** Dispositif à retour tactile selon la revendication 1, dans lequel le moyen de stimulation comprend un rotor et est conçu pour générer une force parallèle à une surface de la peau en utilisant le couple produit par variation d'une vitesse angulaire du rotor pour présenter un stimulus à un utilisateur.

**4.** Dispositif à retour tactile selon la revendication 3, dans lequel le moyen de stimulation comprend un moteur à vibration.

**5.** Dispositif à retour tactile selon la revendication 1, comprenant en outré :

un appareil d'affichage (100) configuré pour afficher visuellement un objet virtuel ;
dans lequel le moyen de commande est configuré pour effectuer une commande sur la base de la relation de position entre l'objet virtuel et le moyen de stimulation dans un espace virtuel.

**6.** Dispositif à retour tactile selon la revendication 1, comprenant en outré :

un moyen de détection de position (103) configuré pour détecter la position de l'utilisateur ; et
un moyen de détermination de contact configuré pour déterminer le contact entre l'utilisateur et un objet virtuel ;
dans lequel le moyen de commande est configuré pour effectuer une commande sur la base du résultat de la
détermination du moyen de détermination de contact.

7. Dispositif à retour tactile selon la revendication 1, configuré pour présenter un objet virtuel,
dans lequel le moyen de commande est configuré pour commander les au moins deux moyens de stimulation (10,
11, 12, 13) afin qu'ils aient des cycles différents lorsque l'utilisateur est positionné dans une plage prédéterminée
de la surface de l'objet virtuel (110).

8. Dispositif à retour tactile selon la revendication 1, dans lequel
le moyen de commande (1) est configuré pour régler au moins un moyen de stimulation (10) à un premier état, et
régler au moins un autre moyen de stimulation (10) à un deuxième état, et pour effectuer une commande permettant
de modifier séquentiellement l'état des moyens de stimulation (10) qui sont dans un premier état ou dans un deuxième
état après qu'un temps prédéterminé se soit écoulé.

9. Dispositif à retour tactile selon l'une quelconque des revendications 1 à 8, dans lequel le premier état du moyen de
stimulation est un état ACTIF et le deuxième état du moyen de stimulation est un état INACTIF.

10. Procédé de retour tactile destiné à présenter la perception d'une pression à un utilisateur en utilisant au moins deux
moyens de stimulation (10, 11), comprenant :

une étape de commande consistant à régler à un premier état et à un deuxième état les au moins deux moyens
de stimulation (10, 11) selon un cycle prédéterminé de façon qu'au moins deux des moyens de stimulation aient
des cycles différents (10, 11) ;
**caractérisé en ce que** chacun des au moins deux moyens de stimulation applique une force de rotation parallèle
à la surface de la peau de l'utilisateur, l'axe de rotation étant normal à la surface de la peau, de façon à provoquer
une déformation de la peau permettant de présenter à l'utilisateur la perception d'une pression.

11. Procédé de retour tactile selon la revendication 10, comprenant une étape consistant à présenter un objet virtuel
(110),
dans lequel l'étape de commande consiste à commander l'attaque de chacun des au moins deux moyens de
stimulation (10) placés sur le corps d'un utilisateur lorsque l'utilisateur est positionné dans une plage prédéterminée
de la surface de l'objet virtuel (110).

12. Procédé de retour tactile selon la revendication 10, l'étape de commande comprenant :

une première étape de commande conçue pour régler au moins un moyen de stimulation (10, 11) à un premier
état et pour régler au moins un autre moyen de stimulation (10, 11) à un deuxième état, des au moins deux
moyens de stimulation (10, 11) placés sur le corps de l'utilisateur ; et
une deuxième étape de commande consistant à modifier séquentiellement l'état des moyens de stimulation
(10, 11) qui sont dans un premier état ou dans un deuxième état après qu'un temps prédéterminé se soit écoulé.

13. Procédé de retour tactile selon l'une quelconque des revendications 10 à 12, dans lequel le premier état des moyens
de stimulation est un état ACTIF et le deuxième état des moyens de stimulation est un état INACTIF.

14. Programme qui, lorsqu'il est exécuté sur un moyen de commande, met en oeuvre un procédé selon les revendications
10 à 13.

15. Support de stockage stockant un programme selon la revendication 14.

# FIG. 1

# FIG. 2

# FIG. 3

# FIG. 4

FIG. 5

# FIG. 6

## FIG. 7

TORQUE OF
VIBRATION
MOTOR 11

TORQUE OF
VIBRATION
MOTOR 10

TORQUE OF
VIBRATION
MOTOR 10

0

TIME

TORQUE

OVERLAPPING OCCURS DURING
TORQUE PRESENTATION TIME

## FIG. 8

TORQUE OF
VIBRATION
MOTOR 11

TORQUE OF
VIBRATION
MOTOR 10

TORQUE OF
VIBRATION
MOTOR 10

0

TIME

TORQUE

BLANKING OCCURS DURING
TORQUE PRESENTATION TIME

# FIG. 9

# FIG. 10

## FIG. 11

ON STATE
(TORQUE GENERATED)

VIBRATION MOTOR 10 — OFF STATE

VIBRATION MOTOR 11

VIBRATION MOTOR 12

VIBRATION MOTOR 13

13  12  11  10

MOVEMENT
OF HAND

2

EP 1 868 063 B1

# FIG. 12

ON STATE
(TORQUE GENERATED)

OFF STATE

VIBRATION MOTOR 10

VIBRATION MOTOR 11

VIBRATION MOTOR 12

VIBRATION MOTOR 13

MOVEMENT
OF HAND

13  12  11  10

2

EP 1 868 063 B1

# FIG. 13

ON STATE
(TORQUE GENERATED)

VIBRATION MOTOR 10

VIBRATION MOTOR 11

VIBRATION MOTOR 12

VIBRATION MOTOR 13

OFF STATE

EP 1 868 063 B1

# FIG. 14

ON STATE
(TORQUE GENERATED)

OFF STATE

VIBRATION MOTOR 10

VIBRATION MOTOR 11

VIBRATION MOTOR 12

VIBRATION MOTOR 13

EP 1 868 063 B1

# FIG. 15

INFORMATION PROCESSING DEVICE  101  102

RECORDING DEVICE

POSITION DETECTING UNIT  103

POSITION DETERMINING UNIT  104

IMAGE OUTPUT UNIT  105

CONTROL UNIT  1

109

108

10

110

2

100

# FIG. 16

REGION I

REGION II d

REGION III

10

d

110

2

# FIG. 17

# FIG. 18

# FIG. 19

# FIG. 20

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2000501033 W
- US 6088017 A
- WO 0227705 A
- US 6087942 A
- US 20030011252 A

### Non-patent literature cited in the description

- **YANO et al.** Development of Haptic Suit for whole human body using vibrators. *Virtual Reality Society of Japan paper magazine,* 1998, vol. 3 (3
- **JONGHYUN RYU et al.** Using a Vibrotactile Display for Enhanced Collision Perception and Presence. *VRST'04,* 10 November 2004
- **R. W. LINDEMAN et al.** Towards Full-Body Haptic Feedback: The Design and Deployment of a Spatialized Vibrotactile Feedback System. *VRST'04,* 10 November 2004